# EUROPEAN PATENT SPECIFICATION

(11) **EP 3 534 555 B1**
(45) Date of publication and mention of the grant of the patent: **16.12.2020**
(21) Application number: 18849435.5
(22) Date of filing: 05.01.2018
(51) Int. Cl.: H04L 1/00, H04L 1/16, H04L 5/00

(54) **METHOD AND APPARATUS FOR SENDING FEEDBACK RESPONSE INFORMATION**
VERFAHREN UND VORRICHTUNG ZUM SENDEN VON RÜCKMELDUNGSINFORMATIONEN
PROCÉDÉ ET APPAREIL PERMETTANT L'ENVOI D'INFORMATIONS DE RÉPONSE DE RÉTROACTION

(43) Date of publication of application: 04.09.2019
(60) Divisional application: 20205929.1
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Yanan, Guangdong 523860 (CN)
(74) Representative: Manitz Finsterwald Patent- und Rechtsanwaltspartnerschaft mbB
(86) International application number: PCT/CN2018/071662
(87) International publication number: WO 2019/134140

(56) References cited:
- EP-A1- 3 242 433
- CN-A- 101 771 520
- CN-A- 103 580 825
- US-A1- 2012 087 254
- US-A1- 2015 349 941
- ERICSSON ET AL: "Multi-cell periodic CSI transmission", 3GPP DRAFT; R1-121986, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 13 May 2012 (2012-05-13), XP050601086, [retrieved on 2012-05-13]
- LG ELECTRONICS: "HARQ process and HARQ-ACK feedback for NR", 3GPP DRAFT; R1-1719930 NR HARQ OPERATION_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369643, Retrieved from the Internet: URL:http://www.3gpp.org/ftp/tsg%5Fran/WG1% 5FRL1/TSGR1%5F91/Docs/ [retrieved on 2017-11-18]
- OPPO: "Discussion on HARQ-ACK transmission", 3GPP DRAFT; R1-1719993, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369689, Retrieved from the Internet: URL:http://www.3gpp.org/ftp/tsg%5Fran/WG1% 5FRL1/TSGR1%5F91/Docs/ [retrieved on 2017-11-18]
- SAMSUNG: "Summary of Email discussion on [NRAH2-08] Down-selection of CBG- based (re)transmission", 3GPP TSG RAN WG1 Meeting #90 R1-1713640, 20 August 2017 (2017-08-20), XP051316440,

## Description

### Technical Field

Embodiments of the application relate to the field of communications, and particularly to feedback response information sending or receiving methods, devices and a system.

### Background

In a New Radio (NR) system, a Carrier Aggregation (CA) technology is adopted. By use of the CA technology, multiple Component Carriers (CCs) may be converged and combined for transmission to and/or from single User Equipment (UE).

After the CA technology is adopted for transmission, UE is required to adopt an uplink control channel to send feedback response information to an access network device, the feedback response information including an Acknowledge (ACK) and a Non-Acknowledge (NACK). Since the feedback response information is contained in Uplink Control Information (UCI) for sending and a maximum bit length of the UCI is preconfigured by a base station, there may be such a situation that a bit length of the ACK and NACK to be transmitted is larger than the maximum bit length. There is yet no solution to how to send, by the UE, the feedback response information to the access network device in such a situation.

US 2012/087254 A1, ERICSSON: "Multi-cell periodic CSI transmission" (3GPP Draft R1-121986), LG ELECTRONICS: "HARQ process and HARQ-ACK feedback for NR" (3GPP Draft R1-1719930), US 2015/349941 A1 and OPPO: "Discussion on HARQ-ACK transmission" (3GPP Draft R1-1719993) provide respective technical solutions; however, the above mentioned problem still remains unsolved.

### Summary

The embodiments of the application provide feedback response information sending method and device which may solve the problem that a terminal cannot send feedback response information to an access network device when a bit length of the feedback response information to be transmitted is larger than a maximum bit length.

The invention is defined by the independent claims.

The technical solutions provided in the embodiments of the application have the following beneficial effects.

When the bit length of the feedback response information to be transmitted is larger than the first bit length, the terminal compresses the feedback response information corresponding to the target CC in the at least two aggregated CCs to obtain the compressed feedback response information. Since the compressed feedback response information is not larger than the first bit length, the terminal can send the feedback response information of the at least two aggregated CCs to the access network device at one time by use of a limited bit length.

### Brief Description of the Drawings

Fig. 1 is a structure diagram of a communication network according to an exemplary embodiment of the application;
Fig. 2 is a flowchart of a feedback response information sending method according to an exemplary embodiment of the application;
Fig. 3 is a schematic diagram of CCs in a CA scenario according to an exemplary embodiment of the application;
Fig. 4 is a schematic diagram of uncompressed feedback response information in the CA scenario provided in the embodiment of Fig. 3;
Fig. 5 is a flowchart of a feedback response information sending method according to an exemplary embodiment of the application;
Fig. 6 is a compression diagram of a compression manner for the feedback response information sending method provided in the embodiment of Fig. 5 in the CA scenario shown in Fig. 3;
Fig. 7 is a flowchart of a feedback response information sending method according to an exemplary embodiment of the application;
Fig. 8 is a compression diagram of a compression manner for the feedback response information sending method provided in the embodiment of Fig. 7 in the CA scenario shown in Fig. 3;
Fig. 9 is a flowchart of a feedback response information sending method according to an exemplary embodiment of the application;
Fig. 10 is a compression diagram of a compression manner for the feedback response information sending method provided in the embodiment of Fig. 9 in the CA scenario shown in Fig. 3;
Fig. 11 is a compression diagram of another compression manner for the feedback response information sending method provided in the embodiment of Fig. 9 in the CA scenario shown in Fig. 3;
Fig. 12 is a schematic diagram of CCs in a CA scenario according to an exemplary embodiment of the application;
Fig. 13 is a schematic diagram of uncompressed feedback response information in the CA scenario provided in the embodiment of Fig. 12;
Fig. 14 is a flowchart of a feedback response information sending method according to an exemplary embodiment of the application;
Fig. 15 is a compression diagram of a compression manner for the feedback response information sending method provided in the embodiment of Fig. 14 in the CA scenario shown in Fig. 12;
Fig. 16 is a flowchart of a feedback response information sending method according to an exemplary embodiment of the application;
Fig. 17 is a compression diagram of a compression manner for the feedback response information sending method provided in the embodiment of Fig. 16 in the CA scenario shown in Fig. 12;
Fig. 18 is a compression diagram of another compression manner for the feedback response information sending method provided in the embodiment of Fig. 16 in the CA scenario shown in Fig. 12;
Fig. 19 is a flowchart of a feedback response information sending method according to an exemplary embodiment of the application;
Fig. 20 is a compression diagram of a compression manner for the feedback response information sending method provided in the embodiment of Fig. 19 in the CA scenario shown in Fig. 3;
Fig. 21 is a flowchart of a feedback response information receiving method according to an exemplary embodiment of the application;
Fig. 22 is a block diagram of a feedback response information sending device according to another exemplary embodiment of the application;
Fig. 23 is a block diagram of a feedback response information receiving device according to another exemplary embodiment of the application;
Fig. 24 is a structure block diagram of a terminal according to another exemplary embodiment of the application; and
Fig. 25 is a structure block diagram of an access network device according to another exemplary embodiment of the application.

### Detailed Description of the Embodiments

In order to make the purpose, technical solutions and advantages of the application clearer, implementation modes of the application will further be described below in combination with the drawings in detail. The scope of the invention is defined in the appended claims. Any reference to "embodiment(s)" or "aspect(s) of the invention" in this description not falling under the scope of the claims should be interpreted as illustrative example(s) for understanding the invention. "Module" mentioned in the invention usually refers to a program or instruction stored in a memory and capable of realizing some functions. "Unit" mentioned in the invention usually refers to a functional structure which is logically divided, and the "unit" may be implemented by pure hardware or implemented by a combination of software and hardware.

"Multiple" mentioned in the invention refers to two or more than two. "And/or" describes an association relationship between associated objects and represents that three relationships may exist. For example, A and/or B may represent three conditions: i.e., independent existence of A, existence of both A and B and independent existence of B. Character "/" in the invention usually represents that previous and next associated objects form an "or" relationship. "First", "second" and similar terms used in the specification and claims of the application do not represent any sequence, number or importance and are only adopted to distinguish different components.

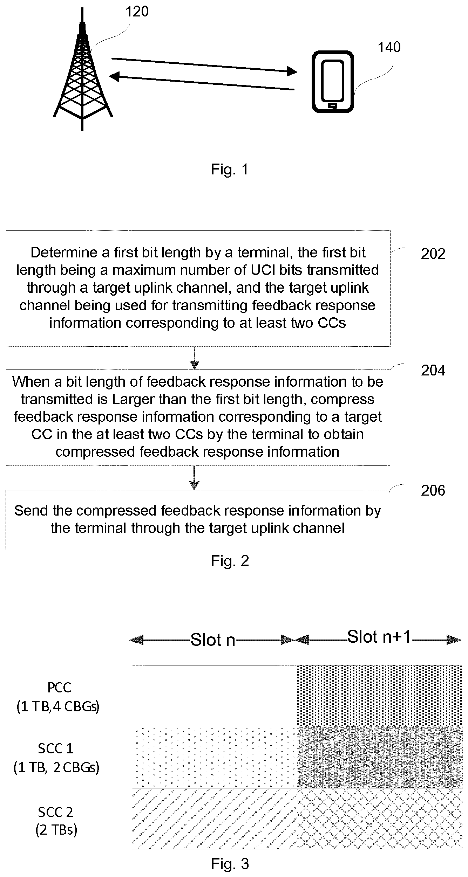

Referring to Fig. 1, a structure diagram of a mobile communication system according to an embodiment of the application is illustrated. The mobile communication system may be a 5th-Generation (5G) system, also called an NR system. The mobile communication system includes an access network device 120 and a terminal 140.

The access network device 120 may be a base station. For example, the base station may be a gNB adopting a central distributed architecture in the 5G system. The access network device 120 adopting the central distributed architecture usually includes a Central Unit (CU) and at least two Distributed Units (DUs). Protocol stacks of a Packet Data Convergence Protocol (PDCP) layer, a Radio Link Control (RLC) layer and a Media Access Control (MAC) layer are set in the CU. A protocol stack of a Physical (PHY) layer is set in the DUs. A specific implementation manner for the access network device 120 is not limited in the embodiment of the application. In at least one exemplary implementation the access network device may further include a Home Evolved Node B (HeNB), a relay, a Pico and the like. The access network device 120 may also be called a network-side device. A generalized network-side device further includes a core network device (not shown in the figure) located in an upper layer of the access network device 120.

The access network device 120 establishes a wireless connection with the terminal 140 through a wireless air interface. In at least one exemplary implementation the wireless air interface is a 5G-standard-based wireless air interface. For example, the wireless air interface is NR. Or, the wireless air interface may also be a wireless air interface based on a next-generation mobile communication network technology standard of 5G.

The terminal 140 may refer to a device providing voice and/or data connectivity for a user. The terminal may communicate with one or more core networks through a Radio Access Network (RAN). The terminal 140 may be a mobile terminal, for example, a mobile phone (or called a "cellular" phone), and a computer with a mobile terminal.

It is to be noted that the mobile communication system shown in Fig. 1 may include multiple access network devices 120 and/or multiple terminals 140. Fig. 1 illustrates one access network device 120 and one terminal 140 for exemplary description. However, there are no limits made thereto in the embodiment.

A plurality of terms involved in the application will be briefly introduced at first.

Uplink: a direction in which a terminal sends data to an access network device is called uplink.

Downlink: a direction in which the access network device sends data to the terminal is called downlink.

Physical Downlink Shared Channel (PDSCH): channel configured for the access network device to send downlink data to the terminal.

Physical Uplink Control Channel (PUCCH): configured for the terminal to send UCI to the access network device, the UCI being configured to feed back an ACK/NACK corresponding to the downlink data, i.e., feedback response information, to the access network device.

Physical Uplink Shared Channel (PUSCH): configured for the terminal to send uplink data to the access network device and also configured for the terminal to send the feedback response information for the downlink data to the access network device.

Transport Block (TB): a division manner for data transmission between the access network device and the terminal.

Code Block Group (CBG): another division manner for data transmission between the access network device and the terminal. A TB may be divided into multiple CBGs. For example, a TB is divided into four CBGs. For another example, a TB is divided into eight CBGs.

CA: a technology adopted for the access network device to send data to or receive data from the terminal through at least two CCs.

Referring to Fig. 2, a flowchart of a feedback response information sending method according to an exemplary embodiment of the application is illustrated. Exemplary descriptions will be made in the embodiment with application of the method to a terminal shown in Fig. 1. The method includes the following operations shown in blocks 202, 204 and 206 of Fig. 1.

In block 202, the terminal determines a first bit length, the first bit length being a maximum number of UCI bits transmitted through a target uplink channel, and the target uplink channel being used for transmitting feedback response information corresponding to at least two CCs.

The target uplink channel is a PUCCH or a PUSCH.

The at least two CCs are carriers for sending data to and/or receiving data from the terminal through a CA technology. The at least two CCs may be continuous carriers in the same frequency band, or discontinuous carriers in the same frequency band, or carriers in different frequency bands.

In at least one exemplary implementation when the CCs adopt TBs for data transmission, the feedback response information includes TB-level feedback response information. When the CCs adopt CBGs for data transmission, the feedback response information includes CBG-level feedback response information.

In at least one exemplary implementation the first bit length is configured for the terminal by an access network device, or, the first bit length is predefined. A determination manner for the first bit length is not limited in the embodiment.

In block 204, when a bit length of feedback response information to be transmitted is larger than the first bit length, the terminal compresses feedback response information corresponding to a target CC in the at least two CCs to obtain compressed feedback response information.

In at least one exemplary implementation the terminal further determines the bit length of the feedback response information to be transmitted according to an amount of received downlink data. When the CCs are configured for TB-level transmission, the bit length of the feedback response information corresponds to the number of TBs. When the CCs are configured for CBG-level transmission, the bit length of the feedback response information corresponds to the number of CBGs.

The target CC may be all or part of carriers in the at least two CCs for which the CA technology is adopted. In at least one exemplary implementation the feedback response information of the target CC is required to be compressed, and the feedback response information of a non-target CC is not required to be compressed.

Compressing the feedback response information refers to compressing the feedback response information of downlink data of multiple units into one and the same bit, that is, the bit is adopted to indicate the feedback response information of the downlink data of the multiple units, and the unit is at least one of a codeword, a TB and a CBG. When a value of the bit is a first value (for example, 1), it is indicated that the downlink data of the multiple units is successfully received. When the value of the bit is a second value (for example, 0), it is indicated that the downlink data of at least one unit in the downlink data of the multiple units is failed to be received.

Herein, a bit length of the compressed feedback response information is less than or equal to the first bit length. The compressed feedback response information is obtained by compressing all bits or part of bits in the uncompressed feedback response information.

When the bit length of the feedback response information to be transmitted is not larger than the first bit length, the terminal does not compress the feedback response information to be transmitted.

In block 206, the terminal sends the compressed feedback response information through the target uplink channel.

In at least one exemplary implementation an uplink resource used for transmitting the feedback response information in the target uplink channel is preconfigured by the access network device or is predefined.

The terminal contains the compressed feedback response information in UCI and sends the UCI to the access network device through the uplink resource in the target uplink channel. In at least one exemplary implementation a preconfigured PUCCH format is adopted for the UCI.

As an exemplary implementation, the terminal sends the compressed feedback response information to the access network device through the PUCCH.

From the above, according to the method provided in the embodiment, when the bit length of the feedback response information to be transmitted is larger than the first bit length, the terminal compresses the feedback response information corresponding to the target CC in the at least two aggregated CCs to obtain the compressed feedback response information. Since the compressed feedback response information is not larger than the first bit length, the terminal can send the feedback response information of the at least two aggregated CCs to the access network device at one time by use of a limited bit length.

In an exemplary embodiment based on the embodiment of Fig. 2, when the bit length of the feedback response information to be transmitted is larger than the first bit length, the terminal determines the target CC in the at least two CCs, the target CC including, but not limited to, at least one of the following six types of carriers:
a Secondary Component Carrier (SCC);
a CC configured for CBG-level transmission;
a first CC of which a supported CBG quantity reaches a first condition, the first condition including that the supported CBG quantity is larger than a first threshold value or the supported CBG quantity is ranked at top n positions, n being an integer, for example, the first threshold value may be equal to 2 CBGs or 4 CBGs and, for another example, CCs ranked at top one or two positions according to a sequence from large to small supported CBGs numbers may be determined as the target CC(s);
a second CC of which an included downlink transmission resource quantity reaches a second condition, the second condition including that the included downlink transmission resource quantity is smaller than a second threshold value or the included downlink transmission resource quantity is ranked at last m positions, for example, the second threshold value may be equal to one symbol, a time-frequency resource in one slot or time-frequency resources in two slots and, for another example, CCs ranked at top one or two positions according to a sequence from small to large included downlink transmission resource quantities may be determined as the target CC(s);
a CC compressed in a first candidate compression solution in multiple candidate compression solutions capable of making the bit length after compression not larger than the first bit length, the first candidate compression solution being a solution in which a largest number of CCs are compressed in the multiple candidate compression solutions; and
a CC compressed in a second candidate compression solution in the multiple candidate compression solutions capable of making the bit length after compression not larger than the first bit length, the second candidate compression solution being a solution in which a smallest number of CCs are compressed in the multiple candidate compression solutions.

On the premise of meeting that the compressed feedback response information is not larger than the first bit length, the terminal may determine at least one carrier in the six types of CCs as the target CC. Then, the feedback response information corresponding to the target CC is compressed.

In at least one exemplary implementation "ranking" refers to any one of ranking from large to small numbers, ranking from small to large numbers, ranking from large to small carrier serial numbers and ranking from small to large carrier serial numbers.

In at least one exemplary implementation when multiple candidate CCs exist, the terminal selects and determines all or part of carriers in the multiple candidate CCs as the target CCs according to a preset priority sequence.

In at least one exemplary implementation the CC refers to a single downlink carrier of a Primary Cell (PCell) or a Secondary Cell (SCell).

The PCell is a cell running on a primary carrier frequency. UE is determined as the PCell when executing initial connection establishment or initial connection reestablishment or in a handover process.

The SCell is a cell running on a secondary carrier frequency, and the cell is configured for Radio Resource Control (RRC).

A terminal may be connected with one PCell and multiple SCells. For example, there may be one to four SCells.

The at least two aggregated CCs include a Primary Component Carrier (PCC) and at least one SCC. Correspondingly, one PCC and multiple SCCs may be involved in a CA process. For example, there may be one to four SCCs. The numbers of the SCells and the SCCs are not limited in the embodiments of the application.

Schematic descriptions will be made below in combination with a specific implementation scenario. Referring to Fig. 3, there is made such a hypothesis that the aggregated CCs include a PCC, an SCC 1 and an SCC 2. Herein, the PCC is configured for CBG-level transmission, adopts a single-codeword transmission mode and supports a maximum CBG quantity of 4. The SCC 1 is configured for CBG-level transmission, adopts the single-codeword transmission mode and supports a maximum CBG quantity of 2. The SCC 2 is configured for TB-level transmission and adopts a double-codeword transmission mode.

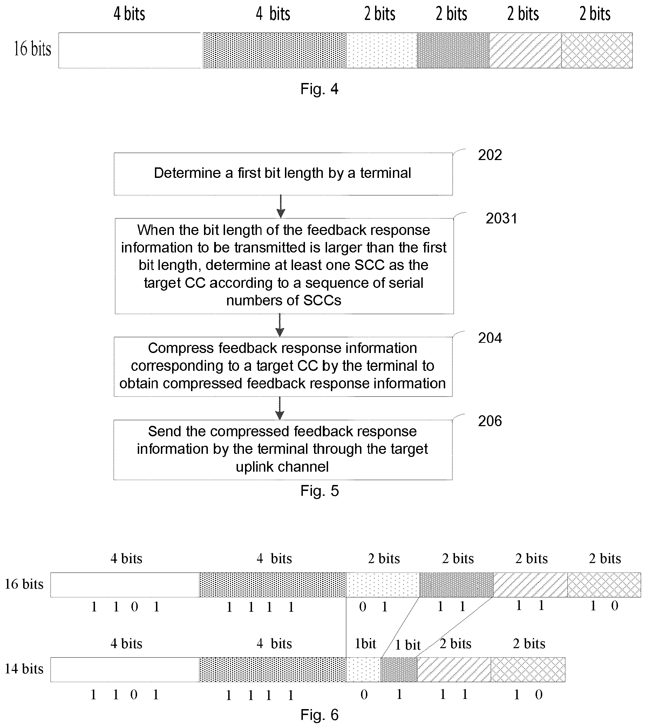

When feedback response information corresponding to a downlink slot n and a downlink slot n+1 is transmitted in a multiplexing manner through the same UCI in a PUCCH, the feedback response information to be transmitted is shown in Fig. 4. Herein, the feedback response information to be transmitted occupies 16 bits in total and includes: feedback response information of four CBGs of the PCC in the slot n, occupying 4 bits in total; feedback response information of four CBGs of the PCC in the slot n+1, occupying 4 bits in total; feedback response information of two CBGs of the SCC 1 in the slot n, occupying 2 bits in total; feedback response information of two CBGs of the SCC 1 in the slot n+1, occupying 2 bits in total; feedback response information of two TBs of the SCC 2 in the slot n, occupying 2 bits in total; and feedback response information of two TBs of the SCC 2 in the slot n+1, occupying 2 bits in total.

That is, in a case where the feedback response information is not compressed, a 16bit uplink resource is required to transmit the present feedback response information.

In an exemplary embodiment based on the embodiment of Fig. 2, the target CC is an SCC. Before the operation that the feedback response information is compressed, an operation in block 2031 is further included. As shown in Fig. 5, the method includes the following operations shown in blocks 202, 2031, 204 and 206 of Fig. 5.

In block 202, the first bit length is determined.

In block 2031, when the bit length of the feedback response information to be transmitted is larger than the first bit length, at least one SCC is determined as the target CC according to a sequence of serial numbers of SCCs.

In at least one exemplary implementation for a purpose that the compressed response information is not larger than the first bit length, the terminal determines the at least one SCC as the target CC according to a descending sequence of the serial numbers of the SCCs; or, the terminal determines the at least one SCC according to an ascending sequence of the serial numbers of the SCCs.

In at least one exemplary implementation the terminal performs calculation to judge whether a bit length of compressed feedback response information obtained after feedback response information of the first i SCCs is compressed according to the ascending sequence of the serial numbers of the SCCs is equal to the first bit length or not, an initial value of i being 1. In a case where the bit length of compressed feedback response information is equal to the first bit length, the first i SCCs are determined as target CCs. In a case where the bit length of compressed feedback response information is larger than the first bit length, i is set to be equal to i+1, and the operation that whether the bit length of the compressed feedback response information obtained after the feedback response information of the first i SCCs is compressed is equal to the first bit length or not is judged is re-executed. A compression manner is not limited in the application. The terminal may also compress the feedback response information to be transmitted at one time, enabling the bit length of the compressed feedback response information to be directly equal to the first bit length.

In block 204, the feedback response information corresponding to the target CC is compressed to obtain the compressed feedback response information.

In at least one exemplary implementation after the SCC is determined as the target CC, in a case where the carrier is configured for TB-level transmission, the feedback response information corresponding to at least two TBs is compressed into one and the same bit. As an exemplary implementation, the feedback response information corresponding to at least two TBs belonging to the same codeword is compressed into one and the same bit. In a case where the carrier is configured for CBG-level transmission, the feedback response information corresponding to at least two CBGs is compressed into one and the same bit. As an exemplary implementation, the feedback response information corresponding to at least two CBGs belonging to the same TB is compressed into one and the same bit. For example, a TB includes a CBG 1, a CBG 2, a CBG 3 and a CBG 4, 2bit feedback response information of the CBG 1 and the CBG 2 may be compressed into one and the same bit, and 2bit feedback response information of the CBG 3 and the CBG 4 may be compressed into one and the same bit; or, the 2bit feedback response information of the CBG 1, the CBG 2, the CBG 3 and the CBG 4 is compressed into one and the same bit.

As an exemplary implementation, when the feedback response information corresponding to the at least two TBs is compressed into one and the same bit, in a case where the feedback response information corresponding to the at least two TBs is ACKs, the compressed bit is also an ACK; and in a case where the feedback response information corresponding to the at least two TBs includes at least one NACK, the compressed bit is a NACK.

As an exemplary implementation, when the feedback response information corresponding to the at least two CBGs is compressed into one and the same bit, in a case where the feedback response information corresponding to the at least two CBGs is ACKs, the compressed bit is also an ACK; and in a case where the feedback response information corresponding to the at least two CBGs includes at least one NACK, the compressed bit is a NACK.

In block 206, the compressed feedback response information is sent through the target uplink channel.

The terminal sends the compressed feedback response information to the access network device through the PUCCH or the PUSCH.

In a specific example in combination with Fig. 3, as shown in Fig. 6, in a case where the first bit length determined by the terminal is 14 bits, the terminal determines the SCC 1 as the target CC according to an ascending sequence of carrier serial numbers of the SCCs. The terminal compresses a CBG-level ACK/NACK corresponding to the SCC 1 to make one TB in the SCC 1 correspond to 1 bit feedback response information.

From the above, according to the method provided in the embodiment, the at least one SCC is determined as the target CC, and the feedback response information corresponding to the target CC is compressed to make the compressed feedback response information not larger than the first bit length, so that normal transmission of the feedback response information of a TB or a CBG in the PCC may be preferably ensured, and Hybrid Automatic Repeat reQuest (HARQ) transmission efficiency of the PCC may be improved.

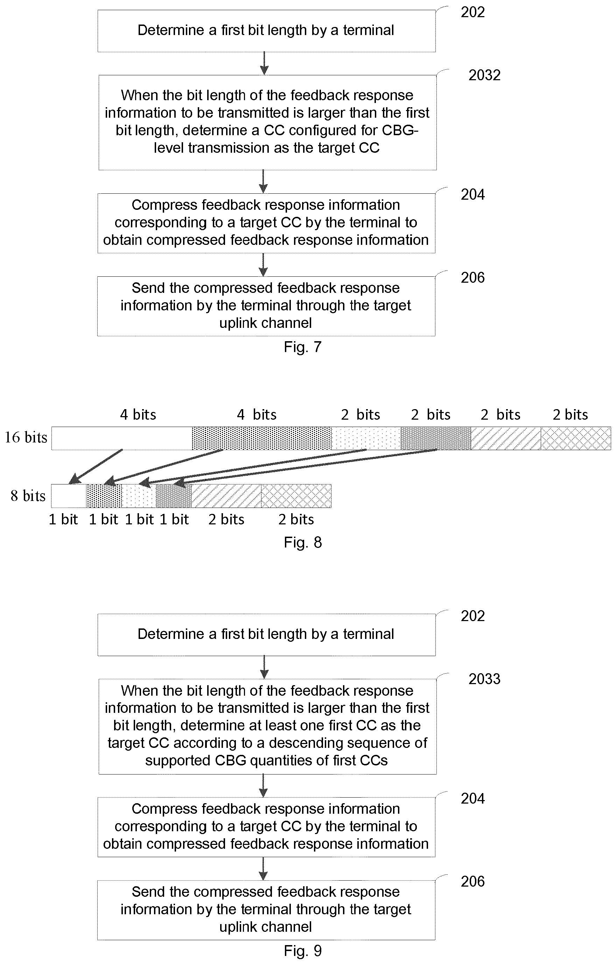

In an exemplary embodiment based on the embodiment of Fig. 2, the target CC includes a CC configured for CBG-level transmission. Before the operation that the feedback response information is compressed, an operation in block 2032 is further included. As shown in Fig. 7, the method includes the following operations shown in blocks 202, 2032, 204 and 206 of Fig. 7.

In block 202, the first bit length is determined.

In block 2032, when the bit length of the feedback response information to be transmitted is larger than the first bit length, a CC configured for CBG-level transmission is determined as the target CC.

In at least one exemplary implementation for the purpose that the compressed feedback response information is not larger than the first bit length, the terminal determines at least one CC configured for CBG-level transmission as the target CC.

In block 204, the feedback response information corresponding to the target CC is compressed to obtain the compressed feedback response information.

In at least one exemplary implementation after the CC configured for CBG-level transmission is determined as the target CC, the feedback response information corresponding to the at least two CBGs is compressed into one and the same bit. As an exemplary implementation, the feedback response information corresponding to at least two CBGs belonging to the same TB is compressed into one and the same bit.

As an exemplary implementation, when the feedback response information corresponding to the at least two CBGs is compressed into one and the same bit, in a case where the feedback response information corresponding to the at least two CBGs is ACKs, the compressed bit is also an ACK; and in a case where the feedback response information corresponding to the at least two CBGs includes at least one NACK, the compressed bit is a NACK.

In block 206, the compressed feedback response information is sent through the target uplink channel.

The terminal sends the compressed feedback response information to the access network device through the PUCCH or the PUSCH.

In a specific example in combination with Fig. 3, as shown in Fig. 8, in a case where the first bit length determined by the terminal is 8 bits, the terminal determines the PCC and the SCC 1 as the target CCs. The terminal compresses a CBG-level ACK/NACK corresponding to the PCC to make one TB (including four CBGs) in the PCC correspond to 1bit feedback response information and compresses the CBG-level ACK/NACK corresponding to the SCC 1 to make one TB (including two CBGs) in the SCC correspond to 1bit feedback response information.

From the above, according to the method provided in the embodiment, the terminal preferably compresses the ACK/NACK of the CC corresponding to the supported CBG quantity, and the feedback response information of the CC supporting TB-level transmission is not required to be compressed, so that transmission efficiency of the CC supporting TB-level transmission is ensured.

In an exemplary embodiment based on the embodiment of Fig. 2, the target CC includes the first CC of which the supported CBG quantity reaches the first condition. Before the operation that the feedback response information is compressed, an operation in block 2033 is further included. As shown in Fig. 9, the method includes the following operations shown in blocks 202, 2033, 204 and 206 of Fig. 9.

In block 202, the first bit length is determined.

In block 2033, when the bit length of the feedback response information to be transmitted is larger than the first bit length, at least one first CC is determined as the target CC according to a descending sequence of supported CBG quantities of first CCs.

In at least one exemplary implementation the first CC is a CC supporting CBGs or a CC configured for CBG-level transmission.

In at least one exemplary implementation for the purpose that the compressed feedback response information is not larger than the first bit length, the terminal determines the at least one first CC as the target CC according to a descending sequence of supported CBG quantities of the first CCs.

In at least one exemplary implementation the terminal performs calculation to judge whether a bit length of compressed feedback response information obtained after feedback response information of first i first CCs is compressed according to the descending sequence of supported CBG quantities of the first CCs is equal to the first bit length or not, an initial value of i being 1. In a case where the bit length of compressed feedback response information is equal to the first bit length, the first i first CCs are determined as target CCs. In a case where the bit length of compressed feedback response information is larger than the first bit length, i is set to be equal to i+1, and the operation that whether the bit length of the compressed feedback response information obtained after the feedback response information of the first i first CCs is compressed is equal to the first bit length or not is judged is re-executed.

In block 204, the feedback response information corresponding to the target CC is compressed to obtain the compressed feedback response information.

In at least one exemplary implementation after the first CC is determined as the target CC, the feedback response information corresponding to at least two CBGs is compressed into one and the same bit. As an exemplary implementation, the feedback response information corresponding to at least two CBGs belonging to the same TB is compressed into one and the same bit. For example, a TB includes a CBG 1, a CBG 2, a CBG 3 and a CBG 4, 2bit feedback response information of the CBG 1 and the CBG 2 may be compressed into one and the same bit, and 2bit feedback response information of the CBG 3 and the CBG 4 may be compressed into one and the same bit; or, the 2bit feedback response information of the CBG 1, the CBG 2, the CBG 3 and the CBG 4 is compressed into one and the same bit.

As an exemplary implementation, when the feedback response information corresponding to the at least two CBGs is compressed into one and the same bit, in a case where the feedback response information corresponding to the at least two CBGs is ACKs, the compressed bit is also an ACK; and in a case where the feedback response information corresponding to the at least two CBGs includes at least one NACK, the compressed bit is a NACK.

In block 206, the compressed feedback response information is sent through the target uplink channel.

The terminal sends the compressed feedback response information to the access network device through the PUCCH or the PUSCH.

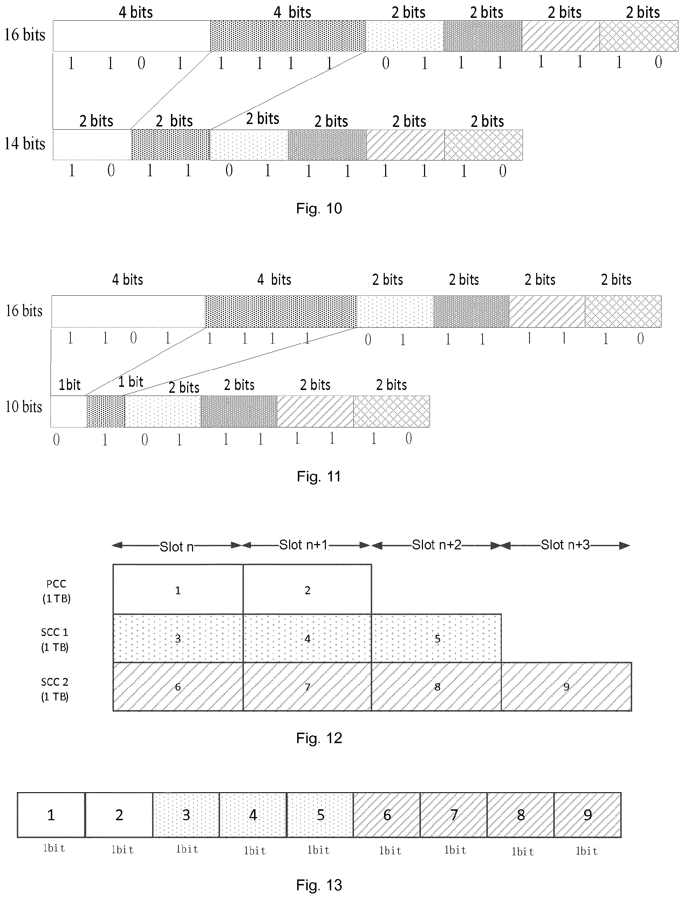

In a specific example in combination with Fig. 3, as shown in Fig. 10, in a case where the first bit length determined by the terminal is 12 bits, the terminal determines the PCC as the target CC according to the descending sequence of supported CBG quantities of the first CCs; and the terminal compresses the CBG-level ACK/NACK corresponding to the PCC to make one TB in the PCC correspond to 2bit feedback response information.

In another specific example in combination with Fig. 3, as shown in Fig. 11, in a case where the first bit length determined by the terminal is 10 bits, the terminal determines the PCC as the target CC according to the descending sequence of supported CBG quantities of the first CCs; and the terminal compresses the CBG-level ACK/NACK corresponding to the PCC to make one TB in the PCC correspond to 1bit feedback response information.

From the above, according to the method provided in the embodiments, the terminal preferably compresses the ACK/NACK of the CC of which the supported CBG quantity is relatively large, and the feedback response information of the CC of which the supported CBG quantity is relatively small and the CC supporting TBs is not required to be compressed, so that compression loss is reduced as much as possible, and the transmission efficiency is improved.

Schematic descriptions will be made below in combination with another specific implementation scenario. Referring to Fig. 12, there is made such a hypothesis that the aggregated CCs include a PCC, an SCC 1 and an SCC 2. An ACK/NACK of the PCC for downlink data sent in a PDSCH in slots n∼n+1 is transmitted in a target PUCCH. An ACK/NACK of the SCC 1 for downlink data sent in the PDSCH in slots n∼n+2 is transmitted in the target PUCCH. An ACK/NACK of the SCC 2 for downlink data sent in the PDSCH in slots n∼n+3 is transmitted in the target PUCCH. In a case where each CC is configured for TB-level transmission and each CC transmits one TB in one slot, the feedback response information to be transmitted is 9 bits, as shown in Fig. 13.

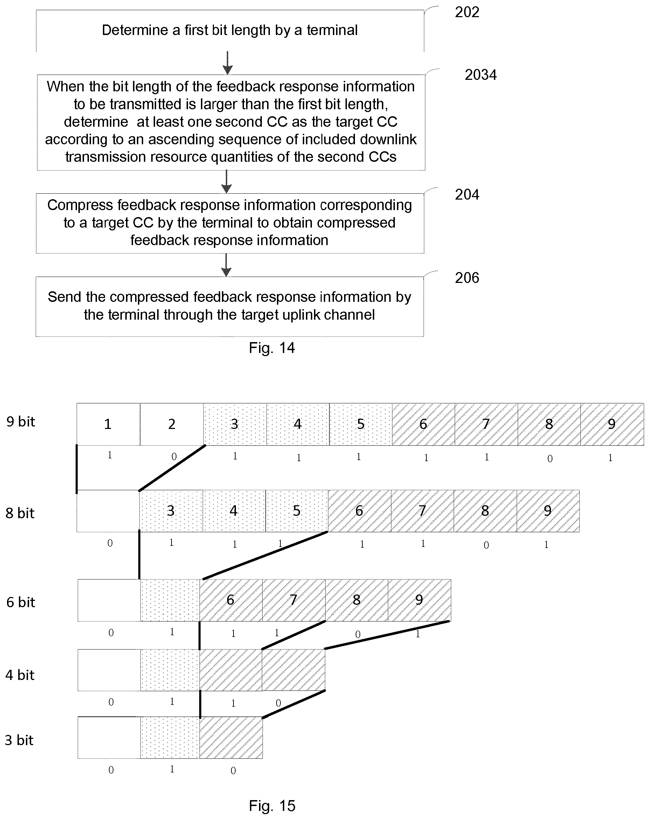

In an exemplary embodiment based on the embodiment of Fig. 2, the target CC includes the second CC of which the included downlink resource quantity reaches the second condition. Before the operation that the feedback response information is compressed, an operation in block 2034 is further included. As shown in Fig. 14, the method includes the following operations shown in blocks 202, 2034, 204 and 206 of Fig. 14.

In block 202, the first bit length is determined.

In block 2034, when the bit length of the feedback response information to be transmitted is larger than the first bit length, at least one second CC is determined as the target CC according to an ascending sequence of included downlink transmission resource quantities of the second CCs.

In at least one exemplary implementation the second CC is any aggregated carrier.

In at least one exemplary implementation for the purpose that the compressed feedback response information is not larger than the first bit length, the terminal determines the at least one second CC as the target CC according to the ascending sequence of included downlink transmission resource quantities of the second CCs.

In at least one exemplary implementation the terminal performs calculation to judge whether a bit length of compressed feedback response information obtained after feedback response information of first i second CCs is compressed according to the ascending sequence of included downlink transmission resource quantities of the second CCs is equal to the first bit length or not, an initial value of i being 1. In a case where the bit length of compressed feedback response information is equal to the first bit length, the first i second CCs are determined as target CCs. In a case where the bit length of compressed feedback response information is larger than the first bit length, i is set to be equal to i+1, and the operation that whether the bit length of the compressed feedback response information obtained after the feedback response information of the first i second CCs is compressed is equal to the first bit length or not is judged is re-executed.

In block 204, the feedback response information corresponding to the target CC is compressed to obtain the compressed feedback response information.

In at least one exemplary implementation after the second CC is determined as the target CC, in a case where the carrier is configured for TB-level transmission, the terminal may compress the feedback response information corresponding to at least two TBs into one and the same bit. As an exemplary implementation, the feedback response information corresponding to at least two TBs belonging to the same codeword is compressed into one and the same bit. In a case where the carrier is configured for CBG-level transmission, the feedback response information corresponding to at least two CBGs is compressed into one and the same bit. As an exemplary implementation, the feedback response information corresponding to at least two CBGs belonging to the same TB is compressed into one and the same bit.

As an exemplary implementation, when the feedback response information corresponding to the at least two TBs is compressed into one and the same bit, in a case where the feedback response information corresponding to the at least two TBs is ACKs, the compressed bit is also an ACK; and in a case where the feedback response information corresponding to the at least two TBs includes at least one NACK, the compressed bit is a NACK.

As an exemplary implementation, when the feedback response information corresponding to the at least two CBGs is compressed into one and the same bit, in a case where the feedback response information corresponding to the at least two CBGs is ACKs, the compressed bit is also an ACK; and in a case where the feedback response information corresponding to the at least two CBGs includes at least one NACK, the compressed bit is a NACK.

In block 206, the compressed feedback response information is sent through the target uplink channel.

The terminal sends the compressed feedback response information to the access network device through the PUCCH or the PUSCH.

In a specific example in combination with Fig. 10, as shown in Fig. 15, in a case where the first bit length determined by the terminal is 8 bits, the terminal determines the PCC as the target CC according to the ascending sequence of the included downlink resource quantities. The terminal compresses the TB-level ACK/NACK corresponding to the PCC to make two TBs in the PCC correspond to 1 bit feedback response information.

In a case where the first bit length determined by the terminal is 6 bits, the terminal determines the PCC and the SCC 1 as the target CCs according to the ascending sequence of the included downlink resource quantities. The terminal compresses a TB-level ACK/NACK corresponding to the PCC to make two TBs in the PCC correspond to 1bit feedback response information and further compresses the TB-level ACK/NACK corresponding to the SCC 1 to make three TBs in the SCC 1 correspond to 1bit feedback response information.

In a case where the first bit length determined by the terminal is 4 bits, the terminal determines the PCC, the SCC 1 and the SCC 2 as the target CCs according to the ascending sequence of the included downlink resource quantities. The terminal compresses the TB-level ACK/NACK corresponding to the PCC to make two TBs in the PCC correspond to 1 bit feedback response information, also compresses the TB-level ACK/NACK corresponding to the SCC 1 to make three TBs in the SCC 1 correspond to 1bit feedback response information and further compresses a TB-level ACK/NACK corresponding to the SCC 2 to make two TBs in the SCC 2 correspond to 1bit feedback response information.

In a case where the first bit length determined by the terminal is 3 bits, the terminal determines the PCC, the SCC 1 and the SCC 2 as the target CCs according to the ascending sequence of the included downlink resource quantities. The terminal compresses the TB-level ACK/NACK corresponding to the PCC to make two TBs in the PCC correspond to 1bit feedback response information, also compresses the TB-level ACK/NACK corresponding to the SCC 1 to make three TBs in the SCC 1 correspond to 1bit feedback response information and further compresses the TB-level ACK/NACK corresponding to the SCC 4 to make two TBs in the SCC 2 correspond to 1bit feedback response information.

From the above, according to the method provided in the embodiment, the terminal preferably compresses the ACK/NACK of the CC of which the included downlink resource quantity is relatively small, and compression is not required by the CC of which the included downlink resource quantity is relatively large, so that the compression loss is reduced as much as possible, and the transmission efficiency is improved.

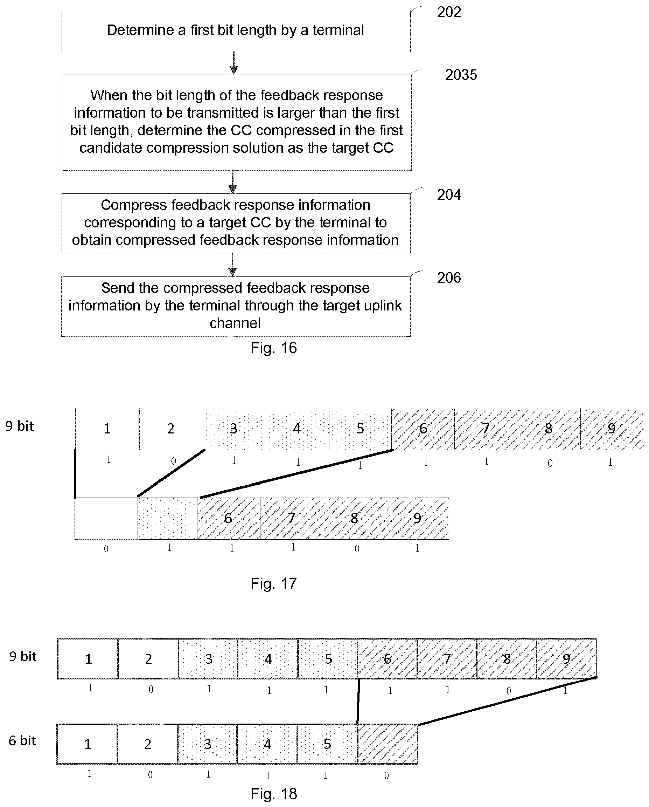

In an exemplary embodiment based on the embodiment of Fig. 2, the target CC includes the CC compressed in the first candidate compression solution. Before the operation that the feedback response information is compressed, an operation in block 2035 is further included. As shown in Fig. 16, the method includes the following operations shown in blocks 202, 2035, 204 and 206 of Fig. 16.

In block 202, the first bit length is determined.

In block 2035, when the bit length of the feedback response information to be transmitted is larger than the first bit length, the CC compressed in the first candidate compression solution is determined as the target CC.

In at least one exemplary implementation the first candidate compression solution refers to a compression solution in which a largest number of CCs are compressed in the multiple candidate compression solutions capable of making the bit length after compression not larger than the first bit length. "Not larger than" refers to smaller than and/or equal to.

In at least one exemplary implementation the first candidate compression solution refers to a compression solution in which a largest number of CCs are compressed in the multiple candidate compression solutions capable of making the bit length after compression not larger than the first bit length. Or, the first candidate compression solution refers to a compression solution in which a largest number of CCs are compressed in the multiple candidate compression solutions capable of making the bit length after compression smaller than the first bit length. Or, the first candidate compression solution refers to a compression solution in which a largest number of CCs are compressed in the multiple candidate compression solutions capable of making the bit length after compression smaller than and equal to the first bit length.

In block 204, the feedback response information corresponding to the target CC is compressed to obtain the compressed feedback response information.

In at least one exemplary implementation after the CC compressed in the first candidate compression solution is determined as the target CC, in a case where the CC is configured for TB-level transmission, the terminal may compress the feedback response information corresponding to at least two TBs into one and the same bit. As an exemplary implementation, the feedback response information corresponding to at least two TBs belonging to the same codeword is compressed into one and the same bit. In a case where the CC is configured for CBG-level transmission, the feedback response information corresponding to at least two CBGs is compressed into one and the same bit. As an exemplary implementation, the feedback response information corresponding to at least two CBGs belonging to the same TB is compressed into one and the same bit.

As an exemplary implementation, when the feedback response information corresponding to the at least two TBs is compressed into one and the same bit, in a case where the feedback response information corresponding to the at least two TBs is ACKs, the compressed bit is also an ACK; and in a case where the feedback response information corresponding to the at least two TBs includes at least one NACK, the compressed bit is a NACK.

As an exemplary implementation, when the feedback response information corresponding to the at least two CBGs is compressed into one and the same bit, in a case where the feedback response information corresponding to the at least two CBGs is ACKs, the compressed bit is also an ACK; and in a case where the feedback response information corresponding to the at least two CBGs includes at least one NACK, the compressed bit is a NACK.

In block 206, the compressed feedback response information is sent through the target uplink channel.

The terminal sends the compressed feedback response information to the access network device through the PUCCH or the PUSCH.

In a specific example in combination with Fig. 10, in a case where the first bit length determined by the terminal is 6 bits, there exist two candidate compression solutions when the purpose is to make the compressed feedback response information equal to the first bit length.

The feedback response information corresponding to two TBs of the PCC is compressed into one and the same bit, and the feedback response information corresponding to three TBs of the SCC 1 is compressed into one and the same bit, as shown in Fig. 17.

The feedback response information corresponding to four TBs of the PCC is compressed into one and the same bit, as shown in Fig. 18.

Since the number of carriers compressed in the candidate compression solution in Fig. 17 is 2 and the number of carriers compressed in the candidate compression solution in Fig. 18 is 1, the terminal determines the candidate compression solution in Fig. 17 as the first candidate compression solution, determines the CCs compressed in the first candidate compression solution as the target CCs and compresses the feedback response information in the target CCs, i.e., the PCC and the SCC 1.

From the above, according to the method provided in the embodiment, the terminal preferably compresses CCs as many as possible, and the feedback response information of CCs transmitting relatively large numbers of TBs or CBGs may be preferably fed back, so that transmission efficiency of the CCs transmitting relatively large numbers of TBs or CBGs is ensured.

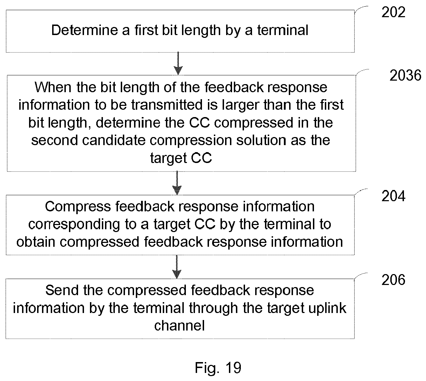

In an exemplary embodiment based on the embodiment of Fig. 2, the target CC includes the CC compressed in the second candidate compression solution. Before the operation that the feedback response information is compressed, an operation in block 2036 is further included. As shown in Fig. 19, the method includes the following operations shown in blocks 202, 2036, 204 and 206 of Fig. 19.

In block 202, the first bit length is determined.

In block 2036, when the bit length of the feedback response information to be transmitted is larger than the first bit length, the CC compressed in the second candidate compression solution is determined as the target CC.

In at least one exemplary implementation the second candidate compression solution refers to a compression solution in which a smallest number of CCs are compressed in the multiple candidate compression solutions capable of making the bit length after compression not larger than the first bit length. "Not larger than" refers to smaller than and/or equal to.

In at least one exemplary implementation the second candidate compression solution refers to a compression solution in which a smallest number of CCs are compressed in the multiple candidate compression solutions capable of making the bit length after compression not larger than the first bit length. Or, the second candidate compression solution refers to a compression solution in which a smallest number of CCs are compressed in the multiple candidate compression solutions capable of making the bit length after compression smaller than the first bit length. Or, the second candidate compression solution refers to a compression solution in which a smallest number of CCs are compressed in the multiple candidate compression solutions capable of making the bit length after compression smaller than and equal to the first bit length.

In block 204, the feedback response information corresponding to the target CC is compressed to obtain the compressed feedback response information.

In at least one exemplary implementation after the CC compressed in the second candidate compression solution is determined as the target CC, in a case where the CC is configured for TB-level transmission, the terminal may compress the feedback response information corresponding to at least two TBs into one and the same bit. As an exemplary implementation, the feedback response information corresponding to at least two TBs belonging to the same codeword is compressed into one and the same bit. In a case where the CC is configured for CBG-level transmission, the feedback response information corresponding to at least two CBGs is compressed into one and the same bit. As an exemplary implementation, the feedback response information corresponding to at least two CBGs belonging to the same TB is compressed into one and the same bit.

As an exemplary implementation, when the feedback response information corresponding to the at least two TBs is compressed into one and the same bit, in a case where the feedback response information corresponding to the at least two TBs is ACKs, the compressed bit is also an ACK; and in a case where the feedback response information corresponding to the at least two TBs includes at least one NACK, the compressed bit is a NACK.

As an exemplary implementation, when the feedback response information corresponding to the at least two CBGs is compressed into one and the same bit, in a case where the feedback response information corresponding to the at least two CBGs is ACKs, the compressed bit is also an ACK; and in a case where the feedback response information corresponding to the at least two CBGs includes at least one NACK, the compressed bit is a NACK.

In block 206, the compressed feedback response information is sent through the target uplink channel.

The terminal sends the compressed feedback response information to the access network device through the PUCCH or the PUSCH.

In a specific example in combination with Fig. 10, in a case where the first bit length determined by the terminal is 6 bits, there exist two candidate compression solutions when the purpose is to make the compressed feedback response information equal to the first bit length.

The feedback response information corresponding to two TBs of the PCC is compressed into one and the same bit, and the feedback response information corresponding to three TBs of the SCC 1 is compressed into one and the same bit, as shown in Fig. 15.

The feedback response information corresponding to four TBs of the PCC is compressed into one and the same bit, as shown in Fig. 16.

Since the number of the carriers compressed in the candidate compression solution in Fig. 17 is 2 (PCC+SCC 1) and the number of the carriers compressed in the candidate compression solution in Fig. 18 is 1 (SCC 2), the terminal determines the candidate compression solution in Fig. 18 as the second candidate compression solution, determines the CC compressed in the second candidate compression solution as the target CC and compresses the feedback response information in the target CC, i.e., the SCC 2.

From the above, according to the method provided in the embodiment, the terminal preferably compresses CCs as few as possible, and the feedback response information of CCs transmitting relatively small numbers of TBs or CBGs may be preferably fed back, so that transmission efficiency of the CCs transmitting relatively small numbers of TBs or CBGs is ensured.

Descriptions are made in combination with Fig. 5, Fig. 7, Fig. 9, Fig. 12, Fig. 14, Fig. 16 and Fig. 19 with the condition that the target CC is one of the six types of CCs as an example, but at least two embodiments of the five embodiments may also be freely combined for implementation. For example, the terminal determines the SCC and the first CC as the target CCs. For another example, the terminal determines the SCC and the second CC as the target CCs. For another example, the terminal determines the first CC and the second CC as the target CCs. No more elaborations will be made in the application. In at least one exemplary implementation when CCs of at least two types exist as candidate CCs, each type corresponds to a respective priority and the terminal selects the candidate CC with a relatively high priority as the target CC.

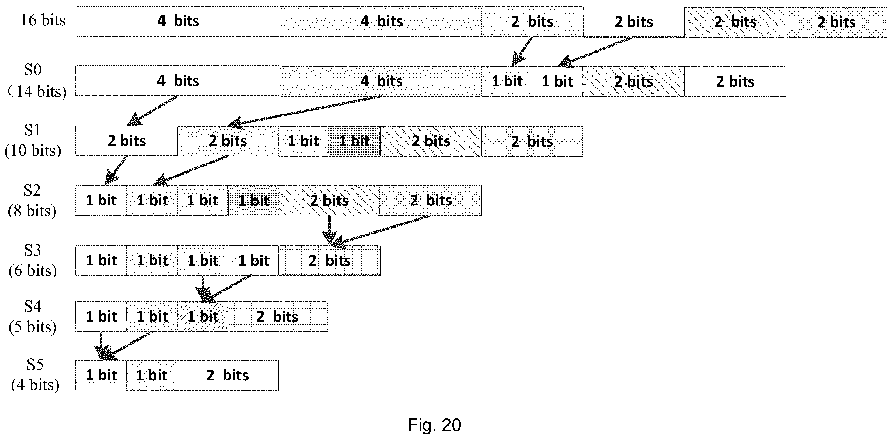

As an exemplary implementation, in an exemplary embodiment in combination with Fig. 3 and Fig. 20, descriptions are made with the condition that the terminal preferably determines the SCC and the first CC as target CCs as an example.

In an exemplary embodiment, in a case where the first bit length is 14, since the SCC 1 is an SCC as well as a CC supporting CBG-level transmission, the terminal determines the SCC 1 as the target CC and compresses CBG-level ACK/NACK information corresponding to the SCC 1 to make one TB (including two CBGs) in the SCC 1 correspond to 1bit feedback response information.

In another exemplary embodiment, in a case where the first bit length is 10, since the SCC 1 is an SCC as well as a CC supporting CBG-level transmission, the PCC is a first CC supporting CBG-level transmission and the SCC 2 is an SCC, the terminal determines the SCC 1 and the PCC as target CCs when the priority of the first CC is higher than the SCC. Namely:
in S0, the terminal compresses the CBG-level ACK/NACK information corresponding to the SCC 1 to make one TB (including two CBGs) in the SCC 1 correspond to 1bit feedback response information; and
in S1, the terminal further compresses CBG-level ACK/NACK information corresponding to the PCC to make one TB (including four CBGs) in the PCC correspond to 2bit feedback response information.

In another exemplary embodiment, in a case where the first bit length is 8, since the SCC 1 is an SCC as well as a CC supporting CBG-level transmission, the PCC is a first CC supporting CBG-level transmission and the SCC 2 is an SCC, the terminal determines the SCC 1 and the PCC as target CCs when the priority of the first CC is higher than the SCC. Namely:
in S0, the terminal compresses the CBG-level ACK/NACK information corresponding to the SCC 1 to make one TB (including two CBGs) in the SCC 1 correspond to 1bit feedback response information;
in S1, the terminal also compresses the CBG-level ACK/NACK information corresponding to the PCC to make one TB (including four CBGs) in the PCC correspond to 2bit feedback response information; and
in S2, the terminal further compresses the CBG-level ACK/NACK information corresponding to the PCC to make one TB (including four CBGs) in the PCC correspond to 1bit feedback response information.

In another exemplary embodiment, in a case where the first bit length is 6, since the SCC 1 is an SCC as well as a CC supporting CBG-level transmission, the PCC is a first CC supporting CBG-level transmission and the SCC 2 is an SCC, the terminal determines the SCC 1, the PCC and the SCC 2 as target CCs when the priority of the first CC is higher than the SCC. Namely:
in S0, the terminal compresses the CBG-level ACK/NACK information corresponding to the SCC 1 to make one TB (including two CBGs) in the SCC 1 correspond to 1bit feedback response information;
in S1, the terminal also compresses the CBG-level ACK/NACK information corresponding to the PCC to make one TB (including four CBGs) in the PCC correspond to 2bit feedback response information; and
in S2, the terminal further compresses the CBG-level ACK/NACK information corresponding to the PCC to make one TB (including four CBGs) in the PCC correspond to 1bit feedback response information; and
in S3, the terminal compresses CBG-level ACK/NACK information corresponding to the SCC 2 to make two TBs of each codeword in two codewords in the SCC 2 correspond to 1bit feedback response information, namely two TBs belonging to the same codeword correspond to 1bit feedback response information.

In another exemplary embodiment, in a case where the first bit length is 5, since the SCC 1 is an SCC as well as a CC supporting CBG-level transmission, the PCC is a first CC supporting CBG-level transmission and the SCC 2 is an SCC, the terminal determines the SCC 1, the PCC and the SCC 2 as target CCs when the priority of the first CC is higher than the SCC. Namely:
in S0, the terminal compresses the CBG-level ACK/NACK information corresponding to the SCC 1 to make one TB (including two CBGs) in the SCC 1 correspond to 1bit feedback response information;
in S1, the terminal also compresses the CBG-level ACK/NACK information corresponding to the PCC to make one TB (including four CBGs) in the PCC correspond to 2bit feedback response information; and
in S2, the terminal further compresses the CBG-level ACK/NACK information corresponding to the PCC to make one TB (including four CBGs) in the PCC correspond to 1bit feedback response information;
in S3, the terminal further compresses the ACK/NACK corresponding to the SCC 2 to make two TBs of each codeword in the two codewords in the SCC 2 correspond to 1bit feedback response information, namely two TBs belonging to the same codeword correspond to 1bit feedback response information; and
in S4, the terminal further compresses the ACK/NACK corresponding to the SCC 1 to make two TBs of a codeword in the SCC 1 correspond to 1bit feedback response information, namely two TBs belonging to the same codeword correspond to 1bit feedback response information.

In another exemplary embodiment, in a case where the first bit length is 4, since the SCC 1 is an SCC as well as a CC supporting CBG-level transmission, the PCC is a first CC supporting CBG-level transmission and the SCC 2 is an SCC, the terminal determines the SCC 1, the PCC and the SCC 2 as target CCs when the priority of the first CC is higher than the SCC. Namely:
in S0, the terminal compresses the CBG-level ACK/NACK information corresponding to the SCC 1 to make one TB (including two CBGs) in the SCC 1 correspond to 1bit feedback response information, totally 10bit;
in S1, the terminal also compresses the CBG-level ACK/NACK information corresponding to the PCC to make one TB (including four CBGs) in the PCC correspond to 2bit feedback response information, totally 10bit;
in S2, the terminal also compresses the CBG-level ACK/NACK information corresponding to the PCC to make one TB (including four CBGs) in the PCC correspond to 1bit feedback response information, totally 8bit;
in S3, the terminal further compresses the ACK/NACK corresponding to the SCC 2 to make two TBs of each codeword in the two codewords in the SCC 2 correspond to 1bit feedback response information, totally 6bit, namely two TBs belonging to the same codeword correspond to 1bit feedback response information;
in S4, the terminal further compresses the ACK/NACK corresponding to the SCC 2 to make two TBs of each codeword in the two codewords in the SCC 2 correspond to 1bit feedback response information, totally 5bit, namely two TBs belonging to the same codeword correspond to 1bit feedback response information; and
in S5, the terminal further compresses the ACK/NACK corresponding to the PCC to make two TBs of a codeword in the PCC correspond to 1bit feedback response information, occupying 4 bits in total, namely two TBs belonging to the same codeword correspond to 1bit feedback response information.

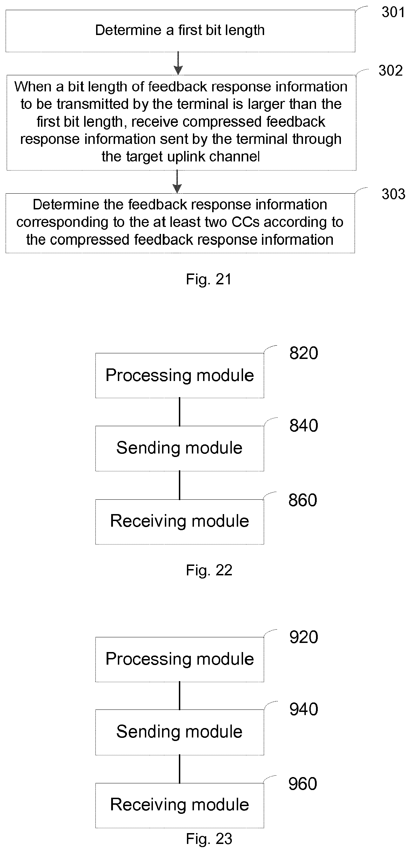

Referring to Fig. 21, a flowchart of a feedback response information receiving method according to an exemplary embodiment of the application is illustrated. Exemplary descriptions will be made in the embodiment with application of the method to an access network device shown in Fig. 1. The method includes the following operations shown in blocks 301, 302 and 303.

In block 301, a first bit length is determined.

The first bit length is a maximum bit length when a terminal transmits uplink control signaling through a target uplink channel, and the target uplink channel is used for transmitting feedback response information corresponding to at least two CCs.

In at least one exemplary implementation the first bit length is configured for the terminal by the access network device, and the access network device acquires the first bit length of the terminal according to a historical configuration condition. Or, the first bit length is predefined, and the access network device acquires the predefined first bit length. A determination manner for the first bit length is not limited in the embodiment.

In block 302, when a bit length of feedback response information to be transmitted by the terminal is larger than the first bit length, compressed feedback response information sent by the terminal is received through the target uplink channel.

In at least one exemplary implementation the access network device further determines the bit length of the feedback response information to be transmitted according to an amount of downlink data sent to the terminal. When the CCs are configured for TB-level transmission, the bit length of the feedback response information corresponds to the number of TBs. When the CCs are configured for CBG-level transmission, the bit length of the feedback response information corresponds to the number of CBGs. Herein, the compressed feedback response information is obtained by the terminal by compressing feedback response information corresponding to a target CC in the at least two CCs, and a bit length of the compressed feedback response information is not larger than the first bit length.

When the bit length of the feedback response information to be transmitted is larger than the first bit length, the access network device receives the compressed feedback response information sent by the terminal through the target uplink channel.

When the bit length of the feedback response information to be transmitted is not larger than the first bit length, the access network device receives the uncompressed feedback response information sent by the terminal through the target uplink channel.

In at least one exemplary implementation an uplink resource used for transmitting the feedback response information in the target uplink channel is preconfigured for the terminal by the access network device or is predefined.

The access network device receives UCI sent by the terminal through the uplink resource in the target uplink channel and acquires the compressed feedback response information from the UCI. In at least one exemplary implementation a preconfigured PUCCH format is adopted for the UCI.

In block 303, the feedback response information corresponding to the at least two CCs is determined according to the compressed feedback response information.

The access network device determines the target CC in a manner the same as that adopted by the terminal, and determines a compression manner for the feedback response information of the target CC in a manner the same as that adopted by the terminal.

For an ith bit in the compressed feedback response information, the access network device determines whether the ith bit is a bit corresponding to a non-target CC or a bit corresponding to the target CC.

When the ith bit is the bit corresponding to the non-target CC, the bit is uncompressed feedback response information, and is configured to feed back feedback response information for downlink data of a unit (the relatively small one in a TB, a codeword and a CBG) in the non-target CC. When the feedback response information is an ACK, the access network device confirms that the terminal successfully receives the downlink data. When the feedback response information is a NACK, the access network device confirms that the terminal does not successfully receive the downlink data, and the access network device may retransmit the downlink data.

When the ith bit is the bit corresponding to the target CC, the bit is compressed feedback response information, and is configured to feed back feedback response information for downlink data of two units (the relatively small one in TBs, codewords and CBGs) in the target CC. When the feedback response information is an ACK, the access network device confirms that the terminal successfully receives the downlink data of the two units. When the feedback response information is a NACK, the access network device confirms that the terminal does not successfully receive the downlink data of the two units, and the access network device may retransmit the downlink data of the two units.

From the above, according to the method provided in the embodiment, when the bit length of the feedback response information to be transmitted is larger than the first bit length, the terminal compresses the feedback response information corresponding to the target CC in the at least two aggregated CCs to obtain the compressed feedback response information. Since the compressed feedback response information is not larger than the first bit length, the terminal can send the feedback response information of the at least two aggregated CCs to the access network device at one time by use of a limited bit length.

It is to be additionally noted that determination of the target CC and the compression manner for the feedback response information of the target CC by the access network device corresponds to and is consistent with the terminal, may refer to the embodiments of Fig. 3 to Fig. 20 and will not be elaborated in the invention.

It is also to be additionally noted that the first bit length may be configured for the terminal by the access network device through high-layer signaling and/or dynamic signaling. In at least one exemplary implementation the access network device may configure bearable maximum coding rates (in a case where the coding rate is lower, a corresponding uplink coverage radius is larger and a probability that sending power of the terminal is limited) for the UCI under different PUCCH formats in advance for the terminal respectively. Second, the access network device may also configure multiple UCI-available resources in the target uplink channel for the terminal through the high-layer signaling, and the UCI-available resources are indicated in at least one of time-domain, frequency-domain and code-domain manners. Then, the access network device further configures a present UCI-available resource for the terminal through dynamic information, and the present UCI-available resource is one of the multiple UCI-available resources. The terminal determines the maximum bit length of the uplink control signaling UCI transmitted in this time according to the maximum coding rate and the present UCI-available resource.

The below is the device embodiment of the application. Since the device embodiment forms a corresponding relationship with the method embodiment, technical details which are not described in the device embodiment may refer to corresponding descriptions in the method embodiment.

Referring to Fig. 22, a block diagram of a feedback response information sending device according to an exemplary embodiment of the application is illustrated. The feedback response information sending device may be implemented into all or part of a terminal through software, hardware or a combination of the two. The device includes a processing module 820, a sending module 840 and a receiving module 860.

The processing module 820 is configured to implement at least one operation of a determination operation, calculation operation and compression operation and all other operations except a sending operation and a receiving operation on a terminal side in the method embodiment. The sending module 840 is configured to implement the sending operation on the terminal side in the method embodiment. The receiving module 860 is configured to implement the receiving operation on the terminal side in the method embodiment. Herein, the processing module 820 may be implemented by executing, by a processor, a code in a memory, the sending module 840 may be implemented by executing the code, by a sender, in the memory and the receiving module 860 may be implemented by executing, by a receiver, a code in the memory. In at least one exemplary implementation the sender and the receiver may be integrated into the same communication chip.

Referring to Fig. 23, a block diagram of a feedback response information sending device according to an exemplary embodiment of the application is illustrated. The feedback response information sending device may be implemented into all or part of an access network device through software, hardware or a combination of the two. The feedback response information sending device includes a processing module 920, a sending module 940 and a receiving module 960.

The processing module 920 is configured to implement at least one operation of a determination operation, a calculation operation and a retransmission operation and all other operations except a sending operation and a receiving operation on an access network device side in the method embodiment. The sending module 940 is configured to implement the sending operation on the access network device side in the method embodiment. The receiving module 960 is configured to implement the receiving operation on the access network device side in the method embodiment. Herein, the processing module 920 may be implemented by executing, by a processor, a code in a memory, the sending module 940 may be implemented by executing the code, by a sender, in the memory and the receiving module 960 may be implemented by executing, by a receiver, a code in the memory. In at least one exemplary implementation the sender and the receiver may be integrated into the same communication chip.

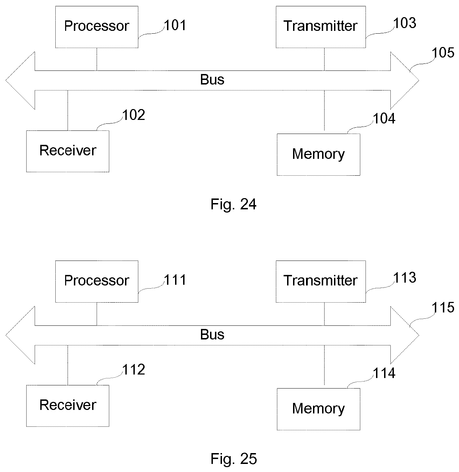

Referring to Fig. 24, a structure diagram of a terminal according to an exemplary embodiment of the application is illustrated. The terminal includes a processor 101, a receiver 102, a transmitter 103, a memory 104 and a bus 105.

The processor 101 includes one or more than one processing core, and the processor 101 runs a software program or a module, thereby executing various functional applications and information processing.

The receiver 102 and the transmitter 103 may be implemented into a communication component, and the communication component may be a communication chip.

The memory 104 is connected with the processor 101 through the bus 105.

The memory 104 may be configured to store at least one instruction, and the processor 101 is configured to execute the at least one instruction to implement each operation in the method embodiment.

In addition, the memory 104 may be implemented by any type of volatile or non-volatile storage devices or a combination thereof, and the volatile or non-volatile storage devices include, but not limited to, a magnetic disk or an optical disk, an Electrically Erasable Programmable Read-Only Memory (EEPROM), an Erasable Programmable Read-Only Memory (EPROM), a Static Random Access Memory (SRAM), a Read-Only Memory (ROM), a magnetic memory, a flash memory and a Programmable Read-Only Memory (PROM).

Referring to Fig. 25, a structure diagram of an access network device according to an exemplary embodiment of the application is illustrated. The access network device includes a processor 111, a receiver 112, a transmitter 113, a memory 114 and a bus 115.

The processor 111 includes one or more than one processing core, and the processor 111 runs a software program or a module, thereby executing various functional applications and information processing.

The receiver 112 and the transmitter 113 may be implemented into a communication component, and the communication component may be a communication chip.

The memory 114 is connected with the processor 111 through the bus 115.

The memory 114 may be configured to store at least one instruction, and the processor 111 is configured to execute the at least one instruction to implement each operation in the method embodiment.

In addition, the memory 114 may be implemented by any type of volatile or non-volatile storage devices or a combination thereof, and the volatile or non-volatile storage devices include, but not limited to, a magnetic disk or an optical disk, an EEPROM, an EPROM, an SRAM, a ROM, a magnetic memory, a flash memory and a PROM.

The application provides a computer-readable storage medium, in which at least one instruction is stored, the at least one instruction being loaded and executed by a processor to implement the feedback information sending method and/or feedback information receiving method provided in each method embodiment.

The application also provides a computer program product, which runs on a computer to enable the computer to execute the feedback response information sending method and/or feedback response information receiving method provided in each method embodiment.

Those skilled in the art should know that, in the one or more examples, functions described in the embodiments of the application may be realized by hardware, software, firmware or any combination thereof. During implementation with the software, these functions may be stored in a computer-readable medium or transmitted as one or more instructions or codes on the computer-readable medium. The computer-readable medium includes a computer storage medium and a communication medium. Herein, the communication medium includes any medium transmitting a computer program from a place to another place. The storage medium may be any available medium accessible to a universal or dedicated computer.

The above is only the preferred embodiment of the application and not intended to limit the application. The scope of the invention is defined by the appended claims.

## Claims

1. A feedback response information sending method, comprising:
determining (202) a first bit length, the first bit length being a maximum number of feedback response information bits transmitted through a target uplink channel, the target uplink channel being used for transmitting feedback response information corresponding to at least two Component Carriers, CCs, and the feedback response information comprising Acknowledge/Non-Acknowledge, ACK/NACK, information;
when a bit length of feedback response information to be transmitted is larger than the first bit length, compressing (204) feedback response information corresponding to a target CC in the at least two CCs to obtain compressed feedback response information, wherein compressing the feedback response information refers to compressing the feedback response information of downlink data of multiple units into one and the same bit; and
sending (206) the compressed feedback response information through the target uplink channel,
wherein a bit length of the compressed feedback response information is not larger than the first bit length;
**characterized in that**
the target CC comprises: a first CC of which a supported Code Block Group, CBG, quantity reaches a first condition, the first condition comprising that the supported CBG quantity is larger than a first threshold value or the supported CBG quantity is ranked at top n positions of supported CBG quantities, being an integer; or, a second CC of which a comprised downlink transmission resource quantity reaches a second condition, the second condition comprising that the comprised downlink transmission resource quantity is smaller than a second threshold value or the comprised downlink transmission resource quantity is ranked at last m positions of comprised downlink transmission resource quantities, n being an integer;
when the target CC comprises the first CC of which the supported CBG quantity reaches the first condition, the method further comprises: determining (2033) at least one first CC as the target CC according to a descending sequence of supported CBG quantities of first CCs;
when the target CC comprises the second CC of which the comprised downlink transmission resource quantity reaches the second condition, the method further comprises: determining (2034) at least one second CC as the target CC according to an ascending sequence of comprised downlink transmission resource quantities of second CCs.

2. The method as claimed in claim 1, wherein the target CC further comprises:
a Secondary Component Carrier, SCC;
and/or, a CC configured for Code Block Group-level, CBG-level, transmission;
and/or, a CC whose corresponding feedback response information is
compressed in a first candidate compression solution or a second candidate compression solution in multiple candidate compression solutions capable of making the bit length after compression not larger than the first bit length,
the first candidate compression solution being a solution in which the feedback response information of a largest number of target CCs are compressed and the second candidate compression solution being a solution in which the feedback response information of a smallest number of target CCs are compressed.

3. The method as claimed in claim 2, wherein ranking is further performed according to carrier serial numbers.

4. The method as claimed in claim 2, wherein the target CC comprises the SCC; and
the method further comprises:
determining (2031) at least one SCC as the target CC according to a sequence of serial numbers of SCCs.

5. A feedback response information sending device, comprising:
a processing module (820), configured to determine a first bit length, the first bit length being a maximum number of feedback response information bits transmitted through a target uplink channel, the target uplink channel being used for transmitting feedback response information corresponding to at least two Component Carriers, CCs, and the feedback response information comprising Acknowledge/Non-Acknowledge, ACK/NACK, information,
the processing module (820) being further configured to, when a bit length of feedback response information to be transmitted is larger than the first bit length, compress feedback response information corresponding to a target CC in the at least two CCs to obtain compressed feedback response information; and
a sending module (840), configured to send the compressed feedback response information through the target uplink channel,
wherein a bit length of the compressed feedback response information is not larger than the first bit length;
**characterized in that**
the target CC comprises: a first CC of which a supported Code Block Group, CBG, quantity reaches a first condition, the first condition comprising that the supported CBG quantity is larger than a first threshold value or the supported CBG quantity is ranked at top n positions of supported CBG quantities, being an integer;
or, a second CC of which a comprised downlink transmission resource quantity reaches a second condition, the second condition comprising that the comprised downlink transmission resource quantity is smaller than a second threshold value or the comprised downlink transmission resource quantity is ranked at last m positions of comprised downlink transmission resource quantities, n being an integer;
when the target CC comprises the first CC of which the supported CBG quantity reaches the first condition, the processing module (820) is further configured to determine at least one first CC as the target CC according to a descending sequence of supported CBG quantities of first CCs;
when the target CC comprises the second CC of which the comprised downlink transmission resource quantity reaches the second condition, the processing module (820) is further configured to determine at least one second CC as the target CC according to an ascending sequence of comprised downlink transmission resource quantities of second CCs.

6. The device as claimed in claim 5, wherein the target CC further comprises:
a Secondary Component Carrier, SCC;
and/or, a CC configured for Code Block Group-level, CBG-level, transmission;
and/or, a CC whose corresponding feedback response information is compressed in a first candidate compression solution or a second candidate compression solution in multiple candidate compression solutions capable of making the bit length after compression not larger than the first bit length,
the first candidate compression solution being a solution in which the feedback response information of a largest number of target CCs are compressed and the second candidate compression solution being a solution in which the feedback response information of a smallest number of target CCs are compressed.

7. The device as claimed in claim 6, wherein ranking is further performed according to carrier serial numbers.

8. The device as claimed in claim 6, wherein the target CC comprises the SCC; and
the processing module (820) is further configured to determine at least one SCC as the target CC according to a sequence of serial numbers of SCCs.

9. A computer-readable storage medium, storing at least one instruction and the at least one instruction being configured to be executed by a processor to implement the feedback response information sending method as claimed in any one of claims 1 to 4.

## Patentansprüche

1. Rückmeldungsantwortinformationen-Sendeverfahren, das Folgendes umfasst:
Bestimmen (202) einer ersten Bitlänge, wobei die erste Bitlänge eine Maximalanzahl von über einen Ziel-Uplink-Kanal übertragenen Rückmeldungsantwortinformationen-Bits ist, wobei der Ziel-Uplink-Kanal verwendet wird zum Übertragen von Rückmeldungsantwortinformationen, die mindestens zwei Komponententrägern, CCs, entsprechen, und die Rückmeldungsantwortinformationen Bestätigung-/Nicht-Bestätigung-Informationen bzw. ACK/NACK-Informationen umfassen;
wenn eine Bitlänge von zu übertragenden Rückmeldungsantwortinformationen größer als die erste Bitlänge ist, Komprimieren (204) von Rückmeldungsantwortinformationen, die einem Ziel-CC in den mindestens zwei CCs entsprechen, um komprimierte Rückmeldungsantwortinformationen zu erhalten, wobei sich Komprimieren der Rückmeldungsantwortinformationen auf Komprimieren der Rückmeldungsantwortinformationen von Downlink-Daten von mehreren Einheiten in ein und dasselbe Bit bezieht; und
Senden (206) der komprimierten Rückmeldungsantwortinformationen über den Ziel-Uplink-Kanal,
wobei eine Bitlänge der komprimierten Rückmeldungsantwortinformationen nicht größer als die erste Bitlänge ist;
**dadurch gekennzeichnet, dass**
der Ziel-CC Folgendes umfasst: einen ersten CC, von dem eine unterstützte Codeblockgruppengröße bzw. CBG-Größe eine erste Bedingung erreicht, wobei die erste Bedingung umfasst, dass die unterstützte CBG-Größe größer als ein erster Schwellenwert ist oder die unterstützte CBG-Größe an n höchsten Positionen von unterstützten CBG-Größen eingestuft ist, wobei n eine ganze Zahl ist;
oder
ein zweiter CC, von dem eine enthaltene Downlink-Übertragungsressourcengröße eine zweite Bedingung erreicht, wobei die zweite Bedingung umfasst, dass die enthaltene Downlink-Übertragungsressourcengröße kleiner als ein zweiter Schwellenwert ist oder die enthaltene Downlink-Übertragungsressourcengröße an m letzten Positionen von enthaltenen Downlink-Übertragungsressourcengrößen eingestuft ist, wobei m eine ganze Zahl ist;
wenn der Ziel-CC den ersten CC umfasst, von dem die unterstützte CBG-Größe die erste Bedingung erreicht, umfasst das Verfahren ferner Folgendes: Bestimmen (2033) mindestens eines ersten CC als den Ziel-CC gemäß einer abfallenden Abfolge von unterstützten CBG-Größen von ersten CCs;
wenn der Ziel-CC den zweiten CC umfasst, von dem die enthaltene Downlink-Übertragungsressourcengröße die zweite Bedingung erreicht, umfasst das Verfahren ferner Folgendes: Bestimmen (2034) mindestens eines zweiten CC als den Ziel-CC gemäß einer ansteigenden Abfolge von enthaltenen Downlink-Übertragungsressourcengrößen von zweiten CCs.

2. Verfahren nach Anspruch 1, wobei der Ziel-CC ferner Folgendes umfasst:
einen Sekundärkomponententräger, SCC;
und/oder einen CC, der ausgelegt ist für Übertragung auf Codeblockgruppenebene bzw. für CBG-Ebene-Übertragung;
und/oder einen CC, dessen entsprechende Rückmeldungsantwortinformationen in einer ersten Kandidatenkomprimierungslösung oder einer zweiten Kandidatenkomprimierungslösung in mehreren Kandidatenkomprimierungslösungen komprimiert werden, die in der Lage sind, die Bitlänge nach Komprimierung nicht größer als die erste Bitlänge zu machen,
wobei die erste Kandidatenkomprimierungslösung eine Lösung ist, in welcher die Rückmeldungsantwortinformationen einer größten Anzahl von Ziel-CCs komprimiert werden, und die zweite Kandidatenkomprimierungslösung eine Lösung ist, in welcher die Rückmeldungsantwortinformationen einer kleinsten Anzahl von Ziel-CCs komprimiert werden.

3. Verfahren nach Anspruch 2, wobei Einstufen ferner gemäß Trägerseriennummern durchgeführt wird.

4. Verfahren nach Anspruch 2, wobei der Ziel-CC den SCC umfasst;
und das Verfahren ferner Folgendes umfasst:
Bestimmen (2031) von mindestens einem SCC als den Ziel-CC gemäß einer Abfolge von Seriennummern von SCCs.

5. Rückmeldungsantwortinformationen-Sendevorrichtung, die Folgendes umfasst:
ein Verarbeitungsmodul (820), ausgelegt zum Bestimmen einer ersten Bitlänge, wobei die erste Bitlänge eine Maximalanzahl von über einen Ziel-Uplink-Kanal übertragenen Rückmeldungsantwortinformationen-Bits ist, wobei der Ziel-Uplink-Kanal verwendet wird zum Übertragen von Rückmeldungsantwortinformationen, die mindestens zwei Komponententrägern, CCs, entsprechen, und die Rückmeldungsantwortinformationen Bestätigung-/Nicht-Bestätigung-Informationen bzw. ACK/NACK-Informationen umfassen;
wobei das Verarbeitungsmodul (820) ferner ausgelegt ist, wenn eine Bitlänge von zu übertragenden Rückmeldungsantwortinformationen größer als die erste Bitlänge ist, zum Komprimieren von Rückmeldungsantwortinformationen, die einem Ziel-CC in den mindestens zwei CCs entsprechen, um komprimierte Rückmeldungsantwortinformationen zu erhalten; und
ein Sendemodul (840), ausgelegt zum Senden der komprimierten Rückmeldungsantwortinformationen über den Ziel-Uplink-Kanal,
wobei eine Bitlänge der komprimierten Rückmeldungsantwortinformationen nicht größer als die erste Bitlänge ist;
**dadurch gekennzeichnet, dass**
der Ziel-CC Folgendes umfasst: einen ersten CC, von dem eine unterstützte Codeblockgruppengröße bzw. CBG-Größe eine erste Bedingung erreicht, wobei die erste Bedingung umfasst, dass die unterstützte CBG-Größe größer als ein erster Schwellenwert ist oder die unterstützte CBG-Größe an n höchsten Positionen von unterstützten CBG-Größen eingestuft ist, wobei n eine ganze Zahl ist;
oder
ein zweiter CC, von dem eine enthaltene Downlink-Übertragungsressourcengröße eine zweite Bedingung erreicht, wobei die zweite Bedingung umfasst, dass die enthaltene Downlink-Übertragungsressourcengröße kleiner als ein zweiter Schwellenwert ist oder die enthaltene Downlink-Übertragungsressourcengröße an m letzten Positionen von enthaltenen Downlink-Übertragungsressourcengrößen eingestuft ist, wobei m eine ganze Zahl ist;
wenn der Ziel-CC den ersten CC umfasst, von dem die unterstützte CBG-Größe die erste Bedingung erreicht, ist das Verarbeitungsmodul (820) ferner ausgelegt zum Bestimmen mindestens eines ersten CC als den Ziel-CC gemäß einer abfallenden Abfolge von unterstützten CBG-Größen von ersten CCs;
wenn der Ziel-CC den zweiten CC umfasst, von dem die enthaltene Downlink-Übertragungsressourcengröße die zweite Bedingung erreicht, ist das Verarbeitungsmodul (820) ferner ausgelegt zum Bestimmen mindestens eines zweiten CC als den Ziel-CC gemäß einer ansteigenden Abfolge von enthaltenen Downlink-Übertragungsressourcengrößen von zweiten CCs.

6. Vorrichtung nach Anspruch 5, wobei der Ziel-CC ferner Folgendes umfasst:
einen Sekundärkomponententräger, SCC;
und/oder einen CC, der ausgelegt ist für Übertragung auf Codeblockgruppenebene bzw. für CBG-Ebene-Übertragung;
und/oder einen CC, dessen entsprechende Rückmeldungsantwortinformationen in einer ersten Kandidatenkomprimierungslösung oder einer zweiten Kandidatenkomprimierungslösung in mehreren Kandidatenkomprimierungslösungen komprimiert werden, die in der Lage sind, die Bitlänge nach Komprimierung nicht größer als die erste Bitlänge zu machen,
wobei die erste Kandidatenkomprimierungslösung eine Lösung ist, in welcher die Rückmeldungsantwortinformationen einer größten Anzahl von Ziel-CCs komprimiert werden, und die zweite Kandidatenkomprimierungslösung eine Lösung ist, in welcher die Rückmeldungsantwortinformationen einer kleinsten Anzahl von Ziel-CCs komprimiert werden.

7. Vorrichtung nach Anspruch 6, wobei Einstufen ferner gemäß Trägerseriennummern durchgeführt wird.

8. Vorrichtung nach Anspruch 6, wobei der Ziel-CC den SCC umfasst; und
das Verarbeitungsmodul (820) ferner ausgelegt ist zum Bestimmen von mindestens einem SCC als den Ziel-CC gemäß einer Abfolge von Seriennummern von SCCs.

9. Computerlesbares Speicherungsmedium, das mindestens eine Anweisung speichert, und wobei die mindestens eine Anweisung dafür ausgelegt ist, durch einen Prozessor ausgeführt zu werden, um das Rückmeldungsantwortinformationen-Sendeverfahren nach einem der Ansprüche 1 bis 4 zu implementieren.

## Revendications

1. Procédé d'envoi d'informations de réponse de rétroaction, comprenant :
la détermination (202) d'une première longueur binaire, la première longueur binaire étant un nombre maximum de bits d'information de réponse de rétroaction transmis par le biais d'un canal de liaison montante cible, le canal de liaison montante cible étant utilisé pour transmettre des informations de réponse de rétroaction correspondant à au moins deux porteuses constituantes, CC, et les informations de réponse de rétroaction comprenant des informations d'acquittement/non-acquittement, ACK/NACK ;
quand une longueur binaire d'informations de réponse de rétroaction à transmettre est supérieure à la première longueur binaire, la compression (204) d'informations de réponse de rétroaction correspondant à une CC cible dans les au moins deux CC pour obtenir des informations de réponse de rétroaction compressées, la compression des informations de réponse de rétroaction se référant à la compression des informations de réponse de rétroaction de données de liaison descendante de multiples unités en un même et unique bit ; et
l'envoi (206) des informations de réponse de rétroaction compressées par le biais du canal de liaison montante cible,
dans lequel une longueur binaire des informations de réponse de rétroaction compressées n'est pas supérieure à la première longueur binaire ;
**caractérisé en ce que**
la CC cible comprend : une première CC dont une quantité de groupes de blocs de code, CBG, prise en charge atteint une première condition, la première condition étant que la quantité de CBG prise en charge soit supérieure à une première valeur limite ou que la quantité de CBG prise en charge soit classée à n positions supérieures de quantités de CBG prises en charge, n étant un entier ;
ou
une seconde CC dont une quantité de ressources de transmission de liaison descendante comprise atteint une seconde condition, la seconde condition étant que la quantité de ressources de transmission de liaison descendante comprise soit inférieure à une seconde valeur limite ou que la quantité de ressources de transmission de liaison descendante comprise soit classée à m dernières positions de quantités de ressources de transmission de liaison descendante comprises, m étant un entier ;
quand la CC cible comprend la première CC dont la quantité de CBG prise en charge atteint la première condition, le procédé comprend en outre : la détermination (2033) d'au moins une première CC comme CC cible conformément à une séquence décroissante de quantités de CBG prises en charge de premières CC ;
quand la CC cible comprend la seconde CC dont la quantité de ressources de transmission de liaison descendante comprise atteint la seconde condition, le procédé comprend en outre : la détermination (2034) d'au moins une seconde CC comme CC cible conformément à une séquence croissante de quantités de ressources de transmission de liaison descendante comprises de secondes CC.

2. Procédé selon la revendication 1, dans lequel la CC cible comprend en outre :
une porteuse constituante secondaire, SCC ;
et/ou, une CC configurée pour une transmission au niveau de groupes de blocs de code, niveau CBG ;
et/ou, une CC dont les informations de réponse de rétroaction correspondantes sont compressées dans une première solution de compression candidate ou une seconde solution de compression candidate dans de multiples solutions de compression candidates capables de faire en sorte que la longueur binaire après compression ne soit pas supérieure à la première longueur binaire,
la première solution de compression candidate étant une solution dans laquelle les informations de réponse de rétroaction du plus grand nombre de CC cibles sont compressées et la seconde solution de compression candidate étant une solution dans laquelle les informations de réponse de rétroaction du plus petit nombre de CC cibles sont compressées.

3. Procédé selon la revendication 2, dans lequel le classement est réalisé en outre conformément à des numéros de série de porteuses.

4. Procédé selon la revendication 2, dans lequel la CC cible comprend la SCC ; et
le procédé comprend en outre :
la détermination (2031) d'au moins une SCC comme CC cible conformément à une séquence de numéros de série de SCC.

5. Dispositif d'envoi d'informations de réponse de rétroaction, comprenant :
un module de traitement (820), configuré pour déterminer une première longueur binaire, la première longueur binaire étant un nombre maximum de bits d'information de réponse de rétroaction transmis par le biais d'un canal de liaison montante cible, le canal de liaison montante cible étant utilisé pour transmettre des informations de réponse de rétroaction correspondant à au moins deux porteuses constituantes, CC, et les informations de réponse de rétroaction comprenant des informations d'acquittement/non-acquittement, ACK/NACK ;
le module de traitement (820) étant configuré en outre pour, quand une longueur binaire d'informations de réponse de rétroaction à transmettre est supérieure à la première longueur binaire, compresser des informations de réponse de rétroaction correspondant à une CC cible dans les au moins deux CC pour obtenir des informations de réponse de rétroaction compressées ; et
un module d'envoi (840), configuré pour envoyer les informations de réponse de rétroaction compressées par le biais du canal de liaison montante cible,
dans lequel une longueur binaire des informations de réponse de rétroaction compressées n'est pas supérieure à la première longueur binaire ;
**caractérisé en ce que**
la CC cible comprend : une première CC dont une quantité de groupes de blocs de code, CBG, prise en charge atteint une première condition, la première condition étant que la quantité de CBG prise en charge soit supérieure à une première valeur limite ou que la quantité de CBG prise en charge soit classée à n positions supérieures de quantités de CGB prises en charge, n étant un entier ;
ou
une seconde CC dont une quantité de ressources de transmission de liaison descendante comprise atteint une seconde condition, la seconde condition étant que la quantité de ressources de transmission de liaison descendante comprise soit inférieure à une seconde valeur limite ou que la quantité de ressources de transmission de liaison descendante comprise soit classée à m dernières positions de quantités de ressources de transmission de liaison descendante comprises, m étant un entier ;
quand la CC cible comprend la première CC dont la quantité de CPG prise en charge atteint la première condition, le module de traitement (820) est configuré en outre pour déterminer au moins une première CC comme CC cible conformément à une séquence décroissante de quantités de CBG prises en charge de premières CC ;
quand la CC cible comprend la seconde CC dont la quantité de ressources de transmission de liaison descendante comprise atteint la seconde condition, le module de traitement (820) est configuré en outre pour déterminer au moins une seconde CC comme CC cible conformément à une séquence croissante de quantités de ressources de transmission de liaison descendante comprises de secondes CC.

6. Dispositif selon la revendication 5, dans lequel la CC cible comprend en outre :
une porteuse constituante secondaire, SCC ;
et/ou, une CC configurée pour une transmission au niveau de groupes de blocs de code, niveau CBG ;
et/ou, une CC dont les informations de réponse de rétroaction correspondantes sont compressées dans une première solution de compression candidate ou une seconde solution de compression candidate dans de multiples solutions de compression candidates capables de faire en sorte que la longueur binaire après compression ne soit pas supérieure à la première longueur binaire,
la première solution de compression candidate étant une solution dans laquelle les informations de réponse de rétroaction du plus grand nombre de CC cibles sont compressées et la seconde solution de compression candidate étant une solution dans laquelle les informations de réponse de rétroaction du plus petit nombre de CC cibles sont compressées.

7. Dispositif selon la revendication 6, dans lequel le classement est réalisé en outre conformément à des numéros de série de porteuses.

8. Dispositif selon la revendication 6, dans lequel la CC cible comprend la SCC ; et
le module de traitement (820) est configuré en outre pour déterminer au moins une SCC comme CC cible conformément à une séquence de numéros de série de SCC.

9. Support de mémorisation lisible par ordinateur, mémorisant au moins une instruction et l'au moins une instruction étant configurée pour être exécutée par un processeur afin de mettre en œuvre le procédé d'envoi d'informations de réponse de rétroaction selon l'une quelconque des revendications 1 à 4.
